Europäisches Patentamt

European Patent Office

Office européen des brevets

(19)

(11) Publication number: **0 140 997**
**A1**

—

## (12) EUROPEAN PATENT APPLICATION

(21) Application number: **83201586.1**

(22) Date of filing: **04.11.83**

(51) Int. Cl.⁴: **B 23 K 1/08**

(43) Date of publication of application:
**15.05.85 Bulletin 85/20**

(84) Designated Contracting States:
**AT BE CH DE FR GB IT LI LU NL SE**

(71) Applicant: **SOLTEC Besloten Vennootschap**
**Industrieterrein Vijf Eikenweg**
**NL-4900 AC Oosterhout (NB)(NL)**

(72) Inventor: **Roepers, Harry**
**SOLTEC, Besloten Vennootschap Karolusstraat 20**
**NL-4903 RJ Oosterhout(NL)**

(72) Inventor: **van Tilburg, Hermanus**
**SOLTEC, Besloten Vennootschap Karolusstraat 20**
**NL-4903 RJ Oosterhout(NL)**

(74) Representative: **Vermeersch, Robert et al,**
**BELL TELEPHONE MANUFACTURING COMPANY**
**Naamloze Vennootschap Patent Department Francis**
**Wellesplein 1**
**B-2000 Antwerp(BE)**

(54) Flow soldering apparatus.

(57) A flow soldering apparatus adapted to apply solder to
closely packed components mounted on one side of printed
circuit boards. The machine comprising means for conveying
the printed boards along an upward slopping path (6), means
(8) to detect the presence of the printed boards (5) at pre-
determined positions along the path and two nozzles (2),
arranged in a solder reservoir (1). The outlet (39) of the first
nozzle (2) being adjustable and able to provide a solder jet
when the presence of a printed board (5) in its immediate
proximity is detected by the detection means (8), otherwise
the outlet of the first nozzle (2) provide a solder wave without
soldering purpose. The second nozzle is classical and pro-
vides a solder wave completing the soldering operation.

EP 0 140 997 A1

./...

FIG. 2

-1-

## Flow soldering apparatus

The present invention relates to an apparatus for applying solder to exposed surfaces of articles, e.g. printed circuit boards, comprising means for conveying said articles along a path, reservoir means adapted to contain solder, at least one nozzle communicating with said reservoir means and having an outlet positioned between said reservoir means and said path and means for ejecting said solder through said nozzle outlet onto said exposed surfaces.

Such an apparatus is already known in the art, e.g. from European patent application N° 0083680. Therein, the above mentioned nozzle is adapted to form a turbulent solder jet while a second nozzle positioned downstream of the first with respect to the direction of conveying of the printed circuit boards is adapted to form a smooth laminar solder wave. The first nozzle is arranged to provide a turbulent jet of solder believed to cause at least some solder to reach all the desired locations of the board, particularly when dense packaging of chip components is used, whereafter the smooth wave from the second nozzle builds on the initial deposit to complete the soldering action. This implies a relatively small orifice for the first nozzle to create a correspondingly small solder jet. In general, with such relatively small jet soldering nozzle outlets, it has been experienced that they may become obstructed at various locations by impurities in the solder, e.g. by components formed by oxidation of the solder. As a result the uniformity of the solder jet is affected so that the printed circuit boards are unsatisfactorily soldered.

An object of the present invention is to provide an apparatus of the type initially defined, but which does not present this drawback, i.e. in which the soldering operation is prevented from being affected by the presence of impurities in the solder.

According to the invention this object is achieved due to the fact that the present apparatus further includes means for regulating the size of said nozzle outlet.

Another characteristic of the present apparatus is that said regulating means are able to modify said nozzle outlet between a smaller and a larger size corresponding respectively to said articles being actively soldered or not.

Thus by making the nozzle outlet size larger prior to a soldering operation the above mentioned impurities which may be present in the solder are evacuated, so that the danger of obstructing this outlet during an immediately following soldering operation, performed with a smaller outlet size, is eliminated or at least considerably reduced.

The above mentioned and other objects and features of the invention will become more apparent and the invention itself will be best understood by referring to the following description of an embodiment taken in conjunction with the accompanying drawings in which :

Fig. 1 is a side view of a soldering apparatus according to the invention, with part of it being cut away;

Fig. 2 is a cross-sectional of part of the soldering apparatus of Fig. 1;

Fig. 3 is a cross-sectional of part of Fig. 2 in another position.

The soldering apparatus shown is adapted to apply solder to exposed lower surfaces of printed circuit boards. It mainly includes :

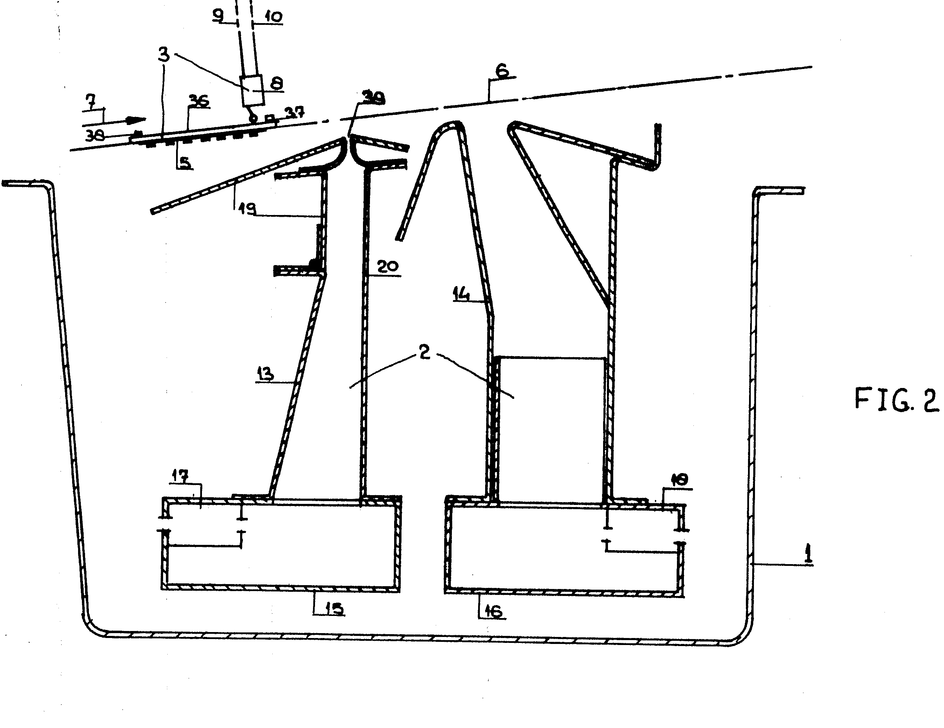

- a reservoir 1 (Fig. 2);

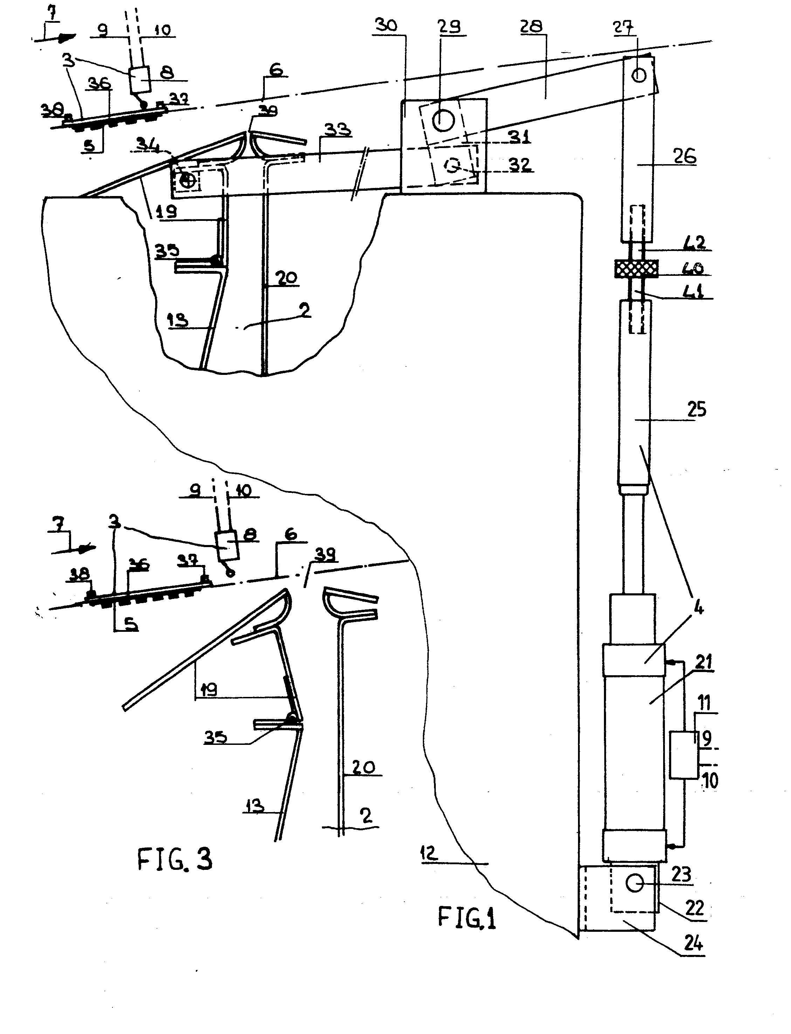

- a nozzle device 2 (Figs. 1, 2, 3) mounted in the reservoir 1;

- a conveyor means 3 (Figs. 1, 2, 3) arranged above the nozzle device 2; and

- regulating means 4 (Fig. 1) coupled with the nozzle device 2.

The conveyor means 3 are not represented in detail as they are well known in the art. They are able to convey component carrying printed circuit boards, such as 5 supported by carriers such as 36 along an upwardly sloping path 6 in the direction of arrow 7 and along a schematically represented switch 8 with electric output leads 9 and 10 which are connected to a control circuit 11 (Fig. 1). The carrier 36 is provided with two contact members 37 and 38 able to cooperate with the switch 2.

The nozzle device 2 is mounted in the reservoir 1 containing molten solder (not shown) and having a frame 12 (Fig. 1). The nozzle device 2 includes two juxtaposed nozzles 13 and 14 communicating with respective ones of two pressure chambers 15 and 16. A pump 17, 18 is mounted in each of these chambers 15, 16 and is able to ensure the circulation of solder from the reservoir 1 into the nozzle 13, 14 via the chamber 15, 16 at a predetermined flow rate and with a wanted pressure. From the nozzle outlets the solder flows back into the reservoir 1.

The nozzle 14 is of a conventional construction and is adapted to complete a soldering operation performed by means of nozzle 13. It is positioned downstream of nozzle 13 with respect to the direction 7 of conveying of the printed circuit boards 5.

The outlet 39 of nozzle 13 has a rectangular shape and is delimited by an adjustable plate 19 at the printed circuit board entry side and by a stationary plate 20 at the printed circuit board exit side, both plates extending in parallel in the transverse direction of the apparatus. When the nozzle outlet 39 has its minimum size, as shown in Figs. 1 and 2, the top edge adjacent the nozzle outlet of the

-4-

stationary plate 20 is located at a higher level than that of the adjacent top edge of the adjustable plate 19, so that the plane of the nozzle outlet is substantially parallel to path 6. The adjustable plate 19 is made of titanium because solder poorly adheres to it.

The adjustable plate 19 is coupled with the above mentioned regulating means 4 in the way described hereinafter. These regulating means include a pneumatic pressure cylinder 21 whose lower end 22 is pivoted at 23 in a fork-shaped piece 24 fixedly mounted at the lower side of the frame 12. The pressure cylinder 21 is controlled by switch 8 via the above electric leads 9 and 10 and control circuit 11 and has a piston rod 25, 26 the two parts of which are coupled through a knurled knob 40 which is integral with oppositely threaded screws 41, 42 engaged in correspondingly threaded blind holes of the piston rod parts 25 and 26 respectively. The piston rod part 26 is coupled in pivot point 27 to a lever arm 28 which is integral with an axle 29 extending transversely of the apparatus and supported in two brackets 30 provided on top of the frame 12 and at opposite sides thereof. In Fig. 1 only one such bracket 30 is visible. At each side the axle 29 is further integral with a lever arm 31 which is hinged in 32 to a control arm 33 itself coupled at 34 to the adjustable plate 19. The latter plate 19 is hingedly mounted about a transverse axle 35.

To be noted that the above lever mechanism 31-34 is provided at either side of the axle 29 to ensure parallelism of the plates 19 and 20.

The operation of the above described soldering apparatus is as follows.

Initially the size of the outlet 39 of nozzle 13 is relatively large, i.e. the adjustable plate 19 is at a relatively large distance from the stationary plate 20, as shown in Fig. 3. As a consequence, when the pump 17 is then operated a stream of solder is forced through the nozzle outlet

-5-

39 thereby evacuating impurities possibly present in the solder.

When the forward contact member 37 of the carrier 36 of the printed circuit board 5 which is conveyed along the upwardly sloping path 6 closes switch 8, the latter signals to the control circuit 11 via its output leads 9 and 10 that a soldering operation has to take place. As a consequence the control circuit 11 operates the pressure cylinder 21 due to which the piston rod 25, 26 thereof which was in its lowermost position is driven to its uppermost position so that the adjustable plate 19 of nozzle 13 is pivoted in clockwise direction to the position shown in Figs. 1 and 2 wherein it is at a smaller distance from plate 20. In this position the nozzle outlet 39 has its smaller size and the top edge of plate 20 is at a higher level than that of plate 19 as described above. When the pump 17 is operated a fine jet of solder is therefore forced through the nozzle outlet 39 and in a direction substantially perpendicular to the printed circuit board.

When the rearward contact member 38 of the carrier 36 of the printed circuit board 5 passes along switch 8 the latter is again closed and signals to the control circuit 11 via its output lead 9 and 10 that the soldering operation performed by nozzle 13 is about to be finished. As a consequence the control circuit 11 then operates the pressure cylinder 21 due to which the piston rod 25, 26 restores the adjustable plate 19 back to its initial position wherein the nozzle outlet 39 has its larger size (Fig. 3).

As explained above the regulating means 21-34 are able to bring the adjustable plate 19 at a smaller or larger distance from stationary plate 20 so as to make the size of nozzle outlet 39 smaller or larger respectively. The above smaller distance may now be regulated by the knurled knob 40 to increase or decrease the gap between the piston rod parts 25 and 26.

-6-

While the principles of the invention have been described above in connection with specific apparatus, it is to be clearly understood that this description is made only by way of an example and not as a limitation on the scope of the invention.

CLAIMS

1. Apparatus for applying solder to exposed surfaces of articles, e.g. printed circuit boards, comprising means for conveying said articles along a path, reservoir means adapted to contain solder, at least one nozzle communicating with said reservoir means and having an outlet positioned between said reservoir means and said path and means for ejecting said solder through said nozzle outlet onto said exposed surfaces, characterized in that it further includes means (21-35) for regulating the size of said nozzle outlet (39).

2. Apparatus according to claim 1, characterized in that said regulating means (21-35) are able to modify said nozzle outlet (39) between a smaller and a larger size corresponding respectively to said articles (5) being actively soldered or not.

3. Apparatus according to claim 1, characterized in that said nozzle outlet (39) is delimited by an adjustable plate (19) coupled with said regulating means and by a stationary plate (20), said adjustable and stationary plates being mounted at the article entry and exit sides of said nozzle outlet (39) respectively.

4. Apparatus according to claim 2, characterized in that it includes means (8, 37, 38) for detecting the presence of said articles (5) in predetermined positions along said path (6) and for controlling said regulating means (21-35) in order to bring said adjustable plate (19) at a smaller or larger distance from said stationary plate (20) corresponding to said smaller and larger nozzle outlet size respectively.

5. Apparatus according to claim 4, characterized in that said regulating means include adjustment means (40-42) for said smaller distance.

6. Apparatus according to claim 1, characterized in that said nozzle outlet (39) is located in a plane which is substantially parallel to said path (6).

7. Apparatus for applying solder according to claim 1, characterized in that said one nozzle (13) is adapted to form a solder jet which is substantially perpendicular to said exposed surfaces and that said apparatus further includes a second nozzle (14) communicating with said reservoir means (1) and having an outlet positioned between said reservoir means and said path and means for ejecting said solder through said second nozzle outlet to said exposed surfaces, said second nozzle (14) being positioned downstream of said first mentioned nozzle with respect to the direction of conveying of said articles (5) and being also adapted to apply solder onto said exposed surfaces.

8. Apparatus according to claim 2, characterized in that said regulation means include at least one pneumatic pressure cylinder.

9. Apparatus according to claim 2, characterized in that said regulation means include at least one lever mechanism.

10. A method of applying solder to exposed surfaces of articles, e.g. printed circuit boards, comprising passing said articles along a path and forming a solder jet oriented to said exposed surfaces characterized in that said solder jet is activated when said articles are in predetermined positions and otherwise is replaced by a solder wave, the solder jet impinging on said articles and the solder wave remaining away therefrom.

FIG. 3

FIG.1

FIG.2

**0140997**

Application number

EP 83 20 1586

European Patent Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | GB-A- 809 833 (ERIE RESISTOR CORP.) <br> * Page 2, lines 47-52 * | 1 | B 23 K 1/08 |
| Y | GB-A-2 008 013 (FRY'S METALS LTD.) <br> * Page 1, lines 67-104; figures * | 1 | |
| A | | 2,3 | |
| A | US-A-4 101 066 (V.A. CORSARO et al.) <br> * Column 4, line 65 - column 5, line 9; figure 4 * | 1-3,6, 7 | |
| A | US-A-3 119 363 (S.L. RIEBEN) <br><br> * Complete document * | 1,2,6, 7 | TECHNICAL FIELDS SEARCHED (Int. Cl. ³) <br><br> B 23 K 1/00 <br> H 05 K 3/00 |
| D,A | EP-A-0 083 680 (ELECTROVERT LTD.) <br> * Claims; figures * | 7,10 | |

The present search report has been drawn up for all claims

| Place of search <br> BERLIN | Date of completion of the search <br> 21-05-1984 | Examiner <br> WUNDERLICH J E |
|---|---|---|